# EUROPEAN PATENT APPLICATION

(11) **EP 3 029 759 A1**
(43) Date of publication of application: **08.06.2016**
(21) Application number: 14195724.1
(22) Date of filing: 01.12.2014
(51) Int. Cl.: H01M 4/134, H01M 4/1395, H01M 4/36, H01M 4/38, H01M 4/587, H01M 4/62, H01M 10/052, H01M 4/133

(54) **Electrode composition comprising carbon naotubes, electrochemical cell and method of making electrochemical cells**

(71) Applicant: 3M Innovative Properties Company, St. Paul, MN 55133-3427 (US)
(72) Inventor: Figgemeier, Egbert, 42799 Leichlingen (DE)
(74) Representative: Bergen, Katja

(57) **Abstract**

An electrode composition is disclosed that includes a silicon alloy containing silicon, iron and optionally carbon. The silicon alloy is capable of undergoing lithiation and delithiation. The electrode composition also includes graphitic carbon, a binder, and a conductive additive containing carbon nanotubes, wherein the composition comprises at least 0,1 % active lithium of the charge capacity of the composition prior to incorporation into an electrochemical cell. This active lithium is introduced via charging the electrode followed by an incomplete discharging step. Such an electrode composition may be used in a negative electrode for an electrochemical cell that also contains a positive electrode and an electrolyte. Also disclosed are battery backs containing such electrochemical cells and methods of making an electrode composition as well as methods of making electrochemical cells using the electrode composition.

## Description

### Field of the Invention

The present invention relates to electrode compositions, electrochemical cells, battery packs and methods of making electrode compositions and electrochemical cell electrodes.

### Background

Powdered alloys and conductive powders such as carbon black have been used to make electrodes for lithium-ion cells in a process that involves mixing the powdered active ingredients with a polymeric binder such as for example polyvinylidene fluoride. The mixed ingredients are prepared as a dispersion in a solvent for the polymeric binder, and coated onto a metal foil substrate, or current collector. The resulting composite electrode contains the powdered active ingredient in the binder, adhered to the metal substrate.

Secondary electrochemical cells, such as lithium-ion cells, are capable of being reversibly charged and discharged multiple times. In the case of lithium-ion batteries, the charging and the discharging of the lithium-ion electrochemical cells are accomplished by lithiating and delithiating the cell electrodes.

When lithium-ion cells are constructed, they usually contain lithium ions in the positive electrode and no lithium ions in the negative electrode. During the initial cycling reaction of the cells (charging), lithium transfers from the positive electrode to the negative electrode until the negative electrode has reached its charge capacity of absorbing lithium-ions. Upon the first discharge, the lithium-ions migrate from the lithiated negative electrode back to the positive electrode.

Typically, after the first discharging not all of the lithium-ions in the negative electrode are able to migrate out of the negative electrode. This results in what is known as irreversible loss in the charge capacity of the cell. Charge capacity minus this irreversible loss gives rise to the discharge capacity. Loss in the discharge capacity of a cell from additional cycling (after the first cycle) is called (discharge) capacity fade. Causes of capacity fade include changes in the morphology of the electrode material upon repeated cycling, a buildup of insulating layers on the active electrode material upon repeated cycling or other reasons.

### Summary

A desirable lithium-ion cell is one that has low volume expansion on cycling, and has low capacity loss (fade) after multiple cycles.

It would be advantageous to provide electrode compositions that may be used to make electrodes that provide a reduced capacity loss after multiple cycles and lower volume expansion on cycling.

In a first aspect, the invention accordingly provides an electrode composition comprising: a silicon alloy comprising silicon, iron and optionally carbon, the silicon alloy being capable of undergoing lithiation and delithiation; a binder, and a conductive additive comprising carbon nanotubes, wherein the composition comprises at least 0,1 % active lithium of the charge capacity of the composition prior to incorporation into an electrochemical cell.

Surprisingly, the inventors have discovered that the use of a conductive additive comprising carbon nanotubes in producing an electrode composition provides reduced fade and reduced volume expansion after multiple cycles. In addition, the inventors have discovered that the presence of additional active lithium prior to incorporation of the electrode composition into an electrode chemical cell provides additional benefit regarding the fade and the reduced volume expansion after multiple cycles. The disclosed electrode composition containing carbon nanotube conductive/conductivity additives at least 0,1% active lithium of the charge capacity of the composition prior to incorporation into an electrochemical cell can improve cycle life in rechargeable lithium-ion cells employing electrodes based on (preferably small particle) alloy powders. The disclosed conductivity additives can also allow fabrication of rechargeable lithium-ion cells having improved capacities.

The percentage of active lithium prior to incorporation into an electrochemical cell may be at least 0,1 %, preferably at least 1 % and more preferably at least 13% of the charge capacity of the composition.

Preferably the composition comprises graphitic carbon. Graphitic carbon helps limiting volume expansion and supplies conductive network within an anode containing Silicon of an electrochemical cell.

Preferably the composition comprises 10wt% to 90wt% silicon alloy, preferably 20wt% to 70wt% silicon alloy more preferably 30wt% to 70wt% silicon alloy, and most preferably 40wt% to 70wt% silicon alloy.

Preferably, the composition comprises 90wt% to 10wt% graphitic carbon, 40wt% to 15wt% graphitic carbon, and more preferably 35wt% to 20wt% graphitic carbon.

Preferably, the composition comprises 2wt% to 20wt% binder, more preferably 4wt% to 15wt% binder or 4wt% to 12wt% binder, most preferably 4wt% to 10wt% binder.

Preferably, the composition comprises 0.2wt% to 80wt% carbon nanotubes, more preferably at least 10 wt% carbon nanotubes, and most preferably at least 20 wt% carbon nanotubes.

In this application, carbon nanotubes are principally understood to mean allotropes of carbon having a tube-like or scroll-like structure with the diameter of the tube being in the scale of between 0.1 nm and 100 nm or larger, with a length that may be in a similar scale or many times greater (e.g. larger than 1 µm). These carbon nanotubes are for example, also referred to as "carbon fibrils" or "hollow carbon fibers". CNTs have the unique property of enhancing mechanical strength and electrical conductivity of the anode material.

Electrode compositions according to the present invention may be used in negative or positive electrodes.

Preferably however, the composition would be used in a negative electrode (anode).

The binder preferably comprises polyacrylate. More preferably, the binder comprises lithium or sodium polyacrylate. Lithium polyacrylate can be made from poly acrylic acid that is neutralized with lithium or sodium hydroxide. Polyacrylic acid helps to provide superior cycle performance compared to other known binders.

In this application, poly(acrylic acid) includes any polymer or copolymer of acrylic acid or methacrylic acid or their derivatives where at least about 50 mole %, at least about 60 mole %, at least about 70 mole %, at least about 80 mole %, or at least about 90 mole % of the copolymer is made using acrylic acid or methacrylic acid. Useful monomers that can be used to form these copolymers include, for example, alkyl esters of acrylic or methacrylic acid that have alkyl groups with 1-12 carbon atoms (branched or unbranched), acrylonitriles, acrylamides, N-alkyl acrylamides, N,N-dialkylacrylamides, hydroxyalkylacrylates, and the like. Of particular interest are polymers or copolymers of acrylic acid or methacrylic acid that are water soluble - especially after neutralization or partial neutralization. Water solubility is typically a function of the molecular weight of the polymer or copolymer and/or the composition. Poly(acrylic acid) is very water soluble and is preferred along with copolymers that contain significant mole fractions of acrylic acid. Poly(methacrylic) acid is less water soluble-particularly at larger molecular weights.

The binder may be blended with other polymeric materials to make a blend of materials. This may be done, for example, to increase the adhesion, to provide enhanced conductivity, to change the thermal properties or to affect other physical properties of the binder.

The electrode composition can include an adhesion promoter that promotes adhesion of the powdered material or electrically conductive additive to the binder. The combination of an adhesion promoter and binder can help the electrode composition better accommodate volume changes that can occur in the powdered material during repeated lithiation/delithiation cycles.

If used, an adhesion promoter can be made a part of the lithium polyacrylate binder (e.g., in the form of an added functional group), can be a coating on the powdered material, can be added to the conductive additive, or can be a combination of such measures. Examples of adhesion promoters include silanes, titanates, and phosphonates.

A variety of silicon alloys can be employed to make the electrode compositions. Exemplary silicon alloys can, for example, contain in addition to silicon and iron, silver, lithium, tin, bismuth, lead, antimony, germanium, zinc, gold, platinum, palladium, arsenic, aluminum, gallium, indium, thallium, molybdenum, niobium, tungsten, tantalum, copper, titanium, vanadium, chromium, nickel, cobalt, zirconium, yttrium, carbon, oxygen, a lanthanide, an actinide or an alloy containing any of the foregoing metals or metalloids and other powdered active metals and metalloids that will be familiar to those skilled in the art.

The silicon alloy and/or graphitic components of the composition are preferably in particle/powder form. Such powders may have a maximum length in one dimension that is no greater than 60 µm, no greater than 40 µm, or no greater than 20 µm, or even smaller. The powders can, for example, have a maximum particle diameter that is submicron, at least 1 µm, at least 2 µm, at least 5 µm, or at least 10 µm or even larger. For example, suitable powders often have a maximum dimension of 1 to 60 µm, 10 to 60 µm, 20 to 60 µm, 40 to 60 µm, 1 to 40 µm, 2 to 40 µm, 10 to 40 µm, 5 to 20 µm, or 10 to 20 µm or 1 to 30 µm, 1 to 20 µm, 1 to 10 µm, or 0.5 to 30 µm, 0.5 to 20 µm, 0.5 to 10 µm.

Alloy anode materials are usually amorphous or nanocrystalline (i.e. crystallite grains having a dimension of 50 nm or less, the size of crystallite being determined by X ray diffraction and the Scherrer method) to improve cycling performance. Such microstructures are typically made by meltspinning, mechanical milling, or sputtering. Of these, melt spinning and mechanical milling are the most commercially viable.

Useful alloys can have a nanocrystalline or amorphous microstructure. X-ray diffraction can be used to determine the grain sizes present in the alloy. Useful alloys can have a microstructure where the largest grain size as determined by the Scherrer equation is less than 50 nm, more preferably less than 40 nm, more preferably less than 30 nm, more preferably less than 15 nm, more preferably less than 10 nm, most preferably less than 5 nm.

An example of a useful Si alloy is an alloy of the formula SiₓM_{y}C_{z} where x, y, and z represent atomic % values and a) x>2y+z; (b) x, y and z are greater than 0; and (c) M is at least iron and may be iron in combination with one or more metals selected from manganese, molybdenum, niobium, tungsten, tantalum, copper, titanium, vanadium, chromium, nickel, cobalt, zirconium, yttrium, or combinations thereof.

Thus, preferably the silicon alloy may be of formula SiₓFe_{y}C_{z}, where x, y and z represent atomic % values and a) x>2y+z, and b) x, y and z are each greater than 0.

Preferably x≥60, and/or y≥5.

A particularly preferred silicon alloy comprises from about 60 to about 80 atomic % silicon, from about 5 to about 20 atomic % iron, and from about 5 to about 15 atomic % carbon.

The most preferred silicon alloy may have a formula of Si₇₃Fe₁₇C₁₀ where the numbers represent atomic % and with a range of atomic % for each component ± 10 atomic %, preferably ± 7 atomic %, more preferably ± 5 atomic % and most preferably ± 3 atomic %.

The particles of the alloys may include a coating at least partially surrounding the particle. By "at least partially surrounding" it is meant that there is a common boundary between the coating and the exterior of the particle. The coating can function as a chemically protective layer and can stabilize, physically and/or chemically, the components of the provided particle. Additionally, coatings useful for stabilizing lithium metal can also be useful as coatings for the provided particle. Other exemplary materials useful for coatings include amorphous carbon, graphitic carbon, LiPON glass, phosphates such as lithium phosphate (Li₂PO₃), lithium metaphosphate (LiPO₃), lithium dithionate (LiS₂O₄), lithium fluoride (LiF), lithium metasilicate (LiSiO₃), and lithium orthosilicate (Li₂SiO₄). The coating can be applied by milling, solution deposition, vapor phase processes, or other processes known to those of ordinary skill in the art.

The electrode composition can contain additives such as will be familiar to those skilled in the art. The electrode composition can include an electrically conductive diluent to facilitate electron transfer from the powdered material to a current collector and between particles.

Electrically conductive additives may also include, but are not limited to, carbon (e.g., carbon black for negative electrodes and carbon black, flake graphite and the like for positive electrodes), metal, metal nitrides, metal carbides, metal silicides, and metal borides. Representative electrically conductive carbon diluents include carbon blacks such as SUPER P and SUPER S carbon blacks (both from MMM Carbon, Timcal, Belgium), SHAWANIGAN BLACK (Chevron Chemical Co., Houston, TX), acetylene black, furnace black, lamp black, graphite, carbon fibers and combinations thereof.

In a second aspect, the invention provides an electrochemical cell comprising a positive electrode, a negative electrode; and an electrolyte, wherein the negative electrode comprises an electrode composition as discussed in relation to the first aspect.

In a third aspect, the present invention provides a battery pack comprising at least one electrochemical cell according to the second aspect.

In a fourth aspect, the invention provides a method of making an electrode composition according to the first aspect of the invention, the method comprising providing a silicon alloy comprising silicon, iron and optionally carbon, the silicon alloy being capable of undergoing lithiation and delithiation; providing a binder, and providing a conductive additive comprising carbon nanotubes; mixing the composition and adding at least 0,1% active lithium of a charge capacity of the composition.

In a fifth aspect, the invention provides a method of making an electrochemical cell electrode, the method comprising providing a current collector; and applying to the current collector an electrode composition comprising a silicon alloy comprising silicon, iron and optionally carbon, the silicon alloy being capable of undergoing lithiation and delithiation; a binder, and a conductive additive comprising carbon nanotubes, wherein the electrode composition comprises at least 0,1% active lithium of the charge capacity of the composition prior to incorporation into an electrochemical cell.

To make an electrode, preferably a negative electrode, the silicon alloy, graphitic carbon, binder and conductive additive comprising carbon nanotubes and any selected additives such as conductive diluents, fillers, adhesion promoters, thickening agents for coating viscosity modification such as carboxymethylcellulose and other additives known by those skilled in the art may be mixed in a suitable coating solvent such as water or N-methylpyrrolidinone (NMP) to form a coating dispersion or coating mixture. The dispersion is mixed thoroughly and then applied to a foil current collector by any appropriate dispersion coating technique such as knife coating, notched bar coating, dip coating, spray coating, electrospray coating, or gravure coating. The current collectors are typically thin foils of conductive metals such as, for example, copper, aluminum, stainless steel, or nickel foil. The slurry is coated onto the current collector foil and then allowed to dry in air followed usually by drying in a heated oven, typically at about 80°C to about 300°C for about an hour to remove all of the solvent.

A variety of electrolytes can be employed in a lithium-ion cell. Representative electrolytes contain one or more lithium salts and a charge-carrying medium in the form of a solid, liquid or gel. Exemplary lithium salts are stable in the electrochemical window and temperature range (e.g. from about -30° C to about 70° C) within which the cell electrodes may operate, are soluble in the chosen charge-carrying media, and perform well in the chosen lithium-ion cell. Exemplary lithium salts include LiPF₆, LiBF₄, LiClO₄, lithium bis(oxalato)borate, LiN(CF₃SO₂)₂, LiN(C₂F₅SO₂)₂, LiAsF₆, LiC(CF₃SO₂)₃, and combinations thereof. Exemplary charge-carrying media are stable without freezing or boiling in the electrochemical window and temperature range within which the cell electrodes can operate, are capable of solubilizing sufficient quantities of the lithium salt so that a suitable quantity of charge can be transported from the positive electrode to the negative electrode, and perform well in the chosen lithium-ion cell. Exemplary solid charge carrying media include polymeric media such as polyethylene oxide, polytetrafluoroethylene, polyvinylidene fluoride, fluorine-containing copolymers, polyacrylonitrile, combinations thereof and other solid media that will be familiar to those skilled in the art. Exemplary liquid charge carrying media include ethylene carbonate, propylene carbonate, dimethyl carbonate, diethyl carbonate, ethyl-methyl carbonate, butylene carbonate, vinylene carbonate, fluoroethylene carbonate, fluoropropylene carbonate, γ-butylrolactone, methyl difluoroacetate, ethyl difluoroacetate, dimethoxyethane, diglyme (bis(2-methoxyethyl) ether), tetrahydrofuran, dioxolane, combinations thereof and other media that will be familiar to those skilled in the art.

The charge carrying media solubilizing power can be improved through addition of a suitable cosolvent. Exemplary cosolvents include aromatic materials compatible with Li-ion cells containing the chosen electrolyte. Representative cosolvents include toluene, sulfolane, dimethoxyethane, combinations thereof and other cosolvents that will be familiar to those skilled in the art. The electrolyte can include other additives that will familiar to those skilled in the art. For example, the electrolyte can include vinylene carbonate or fluorethylene carbonate for stabilizing passivation layers on the anode. Electrochemical cells of this invention are made by taking at least one each of a positive electrode and a negative electrode as described above and placing them in an electrolyte. Typically, a microporous separator, such as CELGARD 2400 microporous material, available from Hoechst Celanese, Corp., Charlotte, N.C., is used to prevent the contact of the negative electrode directly with the positive electrode. This is especially important in coin cells such as, for example, 2325 coin cells as known in the art.

Electrochemical cells made with the negative electrodes of this invention showed reduced fade than similar cells containing conventional negative electrodes and reduced volume expansion after multiple cycles.

The disclosed cells can be used in a variety of devices, including portable computers, tablet displays, personal digital assistants, mobile telephones, motorized devices (e.g., personal or household appliances and vehicles), instruments, illumination devices (e.g., flashlights) and heating devices. One or more electrochemical cells of this invention can be combined to provide battery pack. Further details regarding the construction and use of rechargeable lithium-ion cells and battery packs will be familiar to those skilled in the art.

In this specification:
the phrase "carbon nanotube" refers to allotropes of carbon having a tube-like or scroll-like structure with the diameter of the tube being in the scale of between 0.1 nm and 100 nm or larger, with a length that may be in a similar scale or many times greater (e.g. larger than 1 µm);
the phrase "positive electrode" refers to an electrode (often called a cathode) where electrochemical reduction and lithiation occurs during a discharging process; and
the phrase "negative electrode" refers to an electrode (often called an anode) where electrochemical oxidation and delithiation occurs during a discharging process;
the terms "charge" and "charging" refer to a process for providing electrochemical energy to a cell;
the terms "discharge" and "discharging" refer to a process for removing electrochemical energy from a cell, e.g., when using the cell to perform desired work;
the term "charge/discharge cycle" refers to a cycle wherein an electrochemical cell is fully charged, i.e. the cell attains it's upper cutoff voltage and the cathode is at about 100 % stage of charge, and is subsequently discharged to attain a lower cutoff voltage and the cathode is about 100 % depth of discharge;
the term "charge capacity" refers to the capacity of the electrode composition of absorbing lithium-ions during a charging process;
the term "irreversible loss" refers to the loss in the charge capacity of a cell, that occurs after the first discharging of the cell, where not all of the lithium- ions in the negative electrode are able to migrate out of the negative electrode;
the term "discharge capacity" refers to the difference of the charge capacity minus the discharge capacity;
the term "metal" refers to both metals and to metalloids such as silicon and germanium, whether in an elemental or ionic state;
the term "alloy" refers to a substance that includes any or all of metals, metalloids or semimetals;
the terms "lithiate" and "lithiation" refer to a process for adding lithium to an electrode material or electrochemically active phase;
the terms "delithiate" and "delithiation" refer to a process for removing lithium from an electrode material or electrochemically active phase;
the term "active lithium" refers to the lithium present in a material that can be electrochemically removed from the material at voltages between 0V and 2 V versus lithium metal;
Unless the context requires otherwise, the terms "aliphatic", "cycloaliphatic" and "aromatic" include substituted and unsubstituted moieties containing only carbon and hydrogen, moieties that contain carbon, hydrogen and other atoms (e.g., nitrogen or oxygen ring atoms), and moieties that are substituted with atoms or groups that may contain carbon, hydrogen or other atoms (e.g., halogen atoms, alkyl groups, ester groups, ether groups, amide groups, hydroxyl groups or amine groups).

### Detailed Description

The invention is illustrated in the following illustrative examples.

### Examples

An alloy of composition Si₇₃Fe₁₇C₁₀ was produced by low energy ball milling using the same general procedure as disclosed in U.S.Pat.Publ.No.7,906,238 B2 (Le).

Silicon, and iron were obtained from either Alfa Aesar of Ward Hill, Mass., Aldrich Chemical Company of Milwaukee, Wis. or Alcan Metal Powders of Berkeley, CA.

Appropriate amounts of silicon chips (Alfa Aesar, catalog no. 00311), iron and graphite powder (MCMB-1028, MMM Carob, Belgium) were milled with 28 tungsten carbide balls (each approximately 108 grams) for 4 hours in a 45 milliliter tungsten carbide vessel using a SPEX MILL (Model 8000-D, Spex CertiPrep, Metuchen, N.J.) under an argon atmosphere. The vessel was then opened, chunks of caked powder were broken up, and the milling was continued for an additional hour in an argon atmosphere. The temperature of the tungsten carbide vessel was maintained at about 30° C by air cooling.

### Example 1

### 60wt % Si₇₃Fe₁₇C₁₀, 28wt %, Graphite, 2wt% carbon nanotubes (CNT), 10wt% LiPAA.

35 wt% polyacrylic acid solution (Sigma Aldrich; 250000 Mw) was diluted with deionized water to 10 wt% and neutralized with lithium hydroxide powder. Carbon nanotubes (CNT, C70P, commercially available from Bayer MaterialScience AG) were added and dispersed with a high shear mixer (Primix) until a uniform 2 wt% carbon nanotubes dispersion in lithium polyacrylic (LiPAA) solution was achieved. After achieving a homogeneous dispersion of carbon nanotubes in lithium polyacrylate, 28wt % graphite (Hitachi, MAG-E) was added and mixed in a planetary micro mill on level 9 (Mazerustar Model KK-400 WE) for 18 minutes. The as-produced dispersion was homogeneous.

Finally the dispersion containing lithium polyacrylate, carbon nanotubes and graphite was mixed with the silicon alloy and again mixed in a planetary micro mill on level 9 (Mazerustar Model KK-400 WE) for 18 minutes resulting in a paste ready for coating.

The resulting paste had a composition of 60wt% Si₇₃Fe₁₇C₁₀, 28wt% graphite, 2wt% CNT and 10wt% LiPAA.

This suspension was coated, using a coating bar, on Cu foil and the coating was stamped in round electrodes ready for coin-shaped electrochemical cells assembled as described below in the section headed Test Cell Assembly.

### Example 2

### 26.4 wt% Si₇₃Fe₁₇C₁₀, 10 wt% High Surface Area graphite, 51.6wt % larger grain graphite, 2wt % CNT,

35 wt% polyacrylic acid solution (Sigma Aldrich; 250000 Mw) was diluted with deionized water to 10 wt% and neutralized with lithium hydroxide powder. A commercially available aqueous dispersion of CNT (5 wt% CNT, 5 wt% carboxy methyl cellulose, Baytubes^{®} D W 55 CM, Bayer MaterialScience) was added so that the weight ratio of lithium polyacrylic acid (solid content) and CNT was 4. The aqueous dispersion of CNT (Baytubes^{®} D W 55 CM, Bayer MaterialScience) also contained 5 wt% carboxy methyl cellulose. The dispersion was then homogenized in a planetary micro mill on level 9 Mazerustar Model KK-400 WE) for 18 minutes.

After achieving a homogeneous dispersion of carbon nanotubes with lithium polyacrylic acid and carboxy methyl cellulose in water, successively high surface area graphite (D50 of 3 um, specific surface area of 20 m²/g, KS6, Timcal) and larger grain graphite with lower surface area (D50 of 21 um, BET of 0.7 m²/g, HE1; Hitachi Chemicals) were added. The amounts added were adjusted so that in the final paste including the silicon alloy, 10 wt% high surface area graphite and 51.6 % larger grain graphite were present. The paste was then mixed in a planetary micro mill on level 9 (Mazerustar Model KK-400 WE) for 18 minutes. The as-produced dispersion was homogeneous.

Finally the dispersion containing lithium polyacrylate, carbon nanotubes and graphite was mixed with the silicon alloy and again mixed in a planetary micro mill on level 9 (Mazerustar Model KK-400 WE) for 18 minutes resulting in a paste ready for coating. The resulting paste had a composition of 26.4 wt% Si₇₃Fe₁₇C₁₀, 10 wt% high surface area graphite, 51.6 wt% larger grain size graphite, and 2 wt% CNT.

This suspension was coated using a coating bar on Cu foil and the coating was stamped in round electrodes ready for coin-shaped electrochemical cells assembled as described below under the heading Test Cell Assembly.

### Comparative Example 1

### 60 wt% Si₇₃Fe₁₇C₁₀ Alloy, 28wt% Graphite, 2 wt% Carbon Black, 10wt % LiPAA.

35 wt% polyacrylic acid solution (Sigma Aldrich; 250000 Mw) was diluted with deionized water to 10 wt% and neutralized with lithium hydroxide powder. Carbon black (SuperP, Timcal) was added and dispersed by mixing in a planetary micro mill on level 9 (Mazerustar Model KK-400 WE) for 6 minutes until a uniform 2 wt% carbon black dispersion in lithium polyacrylic solution (LiPAA) was achieved.
After achieving a homogeneous dispersion of carbon black in lithium polyacrylate, 28wt% graphite (Hitachi, MAG-E) was added and mixed in a planetary micro mill on level 9
(Mazerustar Model KK-400 WE) for 18 minutes. The so-produced dispersion was checked for homogeneity.

Finally, the dispersion containing lithium polyacrylate, carbon black and graphite was mixed with the silicon alloy (produced as discussed in Example 1) and again mixed in a planetary micro mill on level 9 (Mazerustar Model KK-400 WE) for 18 minutes resulting in a paste ready for coating.

The resulting paste had a composition of 60 wt% Si₇₃Fe₁₇C₁₀, 28 wt% Graphite, 2 wt% carbon black and 10 wt% LiPAA.

This suspension was coated using a coating bar on Cu foil and the coating was stamped in round electrodes ready for coin-shaped electrochemical cells assembled as described below under the heading Test Cell Assembly.

### Comparative Example 2

### 26.4wt % Si₇₃Fe₁₇C₁₀ alloy, 18.0wt % high surface area graphite, 43.6wt% larger grain size graphite, 2wt % carbon black, 10wt % LiPAA

35 wt% polyacrylic acid solution (Sigma Aldrich; 250000 Mw) was diluted with deionized water to 10 wt% and neutralized with lithium hydroxide powder.

Carbon black (SuperP, Timcal) was added and dispersed by mixing in a planetary micro mill on level 9 (Mazerustar Model KK-400 WE) for 6 minutes until an uniform 2 wt% carbon black dispersion in lithium polyacrylic solution was achieved.

After achieving a homogeneous dispersion of carbon black in lithium polyacrylic acid successively high surface area graphite (KS6, Timcal) and larger grain graphite (HE1; Hitachi Chemicals) were added. The amounts added were adjusted so that in the final paste including the alloy 18.6 wt% high surface area graphite and 43.6 wt% larger grain graphite were achieved. The paste was then mixed in a planetary micro mill on level 9 (Mazerustar Model KK-400 WE) for 18 minutes. The as-produced dispersion was homogeneous.

Finally the dispersion containing lithium polyacrylate, carbon black and graphite was mixed with the silicon alloy and again mixed in a planetary micro mill on level 9 (Mazerustar Model KK-400 WE) for 18 minutes resulting in a paste ready for coating.

The resulting paste had a composition of 26.4 wt% Si₇₃Fe₁₇C₁₀ alloy, 18.0 wt% high surface area graphite, 43.6 wt% larger grain size graphite, 2 wt% carbon black, 10.0 wt% LiPAA.

This suspension was coated using a coating bar on Cu foil and the coating was stamped in round electrodes ready for coin-shaped electrochemical cells assembled as described below under the heading Test Cell Assembly.

### Example 3

### 26.4 wt% Si₇₃Fe₁₇C₁₀ alloy, 61.6 wt % graphite, 2wt% CNT, 8wt % LiPAA, 2wt % CMC

35 wt% polyacrylic acid solution (Sigma Aldrich; 250000 Mw) was diluted with deionized water to 10 wt% and neutralized with lithium hydroxide powder.
A commercially available aqueous dispersion of CNT (5 wt% CNT, 5 wt% carboxy methyl cellulose (CMC), Baytubes^{®} D W 55 CM, Bayer MaterialScience) was added so that the weight ratio of lithium polyacrylic acid and CNT was 4. The dispersion was then homogenized in a planetary micro mill on level 9 Mazerustar Model KK-400 WE) for 18 minutes.

After achieving a homogeneous dispersion of carbon nanotubes in lithium polyacrylic acid and carboxy methyl cellulose, graphite (HE1, Hitachi Chemicals) was added. The paste was then mixed in a planetary micro mill on level 9 Mazerustar Model KK-400 WE) for 18 minutes. The as-produced dispersion was checked for homogeneity.

Finally the dispersion containing lithium polyacrylate, carbon nanotubes and graphite was mixed with the Silicon alloy and again mixed in a planetary micro mill on level 9 (Mazerustar Model KK-400 WE) for 18 minutes resulting in a paste ready for coating. The resulting paste had a composition of 26.4 wt% Si₇₃Fe₁₇C₁₀ alloy, 61.6 wt % graphite, 2wt% CNT, 8wt % LiPAA, 2wt % CMC.

This suspension was coated using a coating bar on Cu foil and the coating was stamped in round electrodes ready for coin-shaped electrochemical cells assembled as described below under the heading Test Cell Assembly.

**Table 1**

| | Capacity Retention after 50 cycles / % | Volume Expansion after 50 cycles / % |
|---|---|---|
| Example 1 | 95 | |
| Example 2 | 95 | 39 |
| Comparative Example 1 | 81 | |
| Comparative Example 2 | | 66 |
| Example 3 | | 50 |

### Test Cell Assembly

Disks (16 mm diameter) were cut from the electrode coatings for use in 2325-button cells. Each 2325 cell contains a 18 mm diameter disk of Cu as a spacer (900 µm thick), a 18 mm diameter disk of the alloy electrode, one 20 mm diameter microporous separator (CELGARD 2400; Separation Products, Hoechst Celanese Corp., Charlotte, N.C. 28273), 18 mm diameter disk of lithium (0.38 mm thick lithium ribbon; Aldrich Chemicals, Milwaukee, Wis.) and an 18 mm copper spacer (900 µm thick). One hundred micro liters of electrolyte solution (1M LiPF₆ in 90 wt% ethylene carbonate (EC):diethylene carbonate (DEC)(1:2 v/v ))(Ferro Chemicals (Zachary, La.); 10 wt% fluoroethylene carbonate (FEC)(Fujian Chuangxin Science and Technology Development, LTP, Fujian, China)) were mixed and used as the electrolyte. The electrolyte mixture was dried over molecular sieves (3A type) over 12 hours. The coin cells were charged and discharged from 0.005 V to 0.9 V with a constant current of 250 mA/g. During charging, when the cell voltage reached 0.9 V, the cell voltage was held constant and the charging continued until the current reached 10 mA/g. The cell was allowed to remain at open circuit for fifteen minutes at the end of every half cycle.

Volume expansion of the negative electrode was calculated by measuring the thickness of the fresh coated electrode (denoted to, includes current collector and coated composite) using a drop-down micrometer and 60 psi (414 kPa) of pressure. The thickness of the Cu current collector (t_{c}) was measured with the same micrometer. The volume expansion after the first lithiation was obtained by disassembling a discharged half cell in a dry room, removing the negative electrode and measuring its thickness (t₁) with the same micrometer. The volume expansion can be calculated by (t₁-t₀)/(t₀-t_{c}) assuming a constant surface area. The volume expansion after 50 cycles is obtained using the identical protocol except that the half cell is disassembled after the 51^{st} discharge.

Capacity retention after 50 cycles and volume expansion after 50 cycles are shown in Table 1. Normalized capacity with cycle number is illustrated for Example 1 and Comparative Example 1 in the Figure showing a reduced fade for Example 1 after multiple cycles.

A number of embodiments of the invention have been described. Nevertheless, it will be understood that various modifications can be made without departing from the spirit and scope of the invention. Accordingly, other embodiments are within the scope of the claims.

Embodiments of the invention include the following embodiments 1 to 15.

### Example 10

### Anode Preparation

### 60wt % Si₇₃Fe₁₇C₁₀, 12.8wt % graphite (Hitachi-MAGD), 16wt% carbon nanotubes (CNT), 3.2wt% CMC, 8wt% LiPAA.

35 wt% polyacrylic acid solution (Sigma Aldrich; 250000 Mw) in water was diluted with deionized water to 10 wt% and neutralized with lithium hydroxide powder. Two aqueous dispersions of CNT (a) 5 wt% CNT Bayer MaterialScience with 5 wt% carboxy methyl cellulose and 5 wt%CNT BayerMaterialScience with 1% carboxy methyl cellulose) were added so that the weight ratio of lithium polyacrylic acid (solid content) and CNT was 0.5 and mixed in a planetary micro mill with 800 rounds/minute (Fritsch Pulverisette) for 10 minutes. After achieving a homogeneous dispersion of carbon nanotubes in lithium polyacrylate and carboxy methyl cellulose, graphite (Hitachi, MAG-D) was added and mixed in a planetary micro mill with 800 rounds/minute (Fritsch Pulverisette) for 10 minutes. The as-produced dispersion was homogeneous.

Finally the dispersion containing lithium polyacrylate, carboxy methyl cellulose, carbon nanotubes and graphite was mixed with the silicon alloy and again mixed in a planetary micro mill at 800 rounds/minute (Fritsch Pulverisette) for 10 minutes resulting in a paste ready for coating. The amounts of added graphite and silicon alloy were adjusted so that a composition of 60wt % Si73Fe17C10 (alloy), 12.8wt % graphite (Hitachi-MAGD), 16wt% carbon nanotubes (CNT), 3.2wt% carboxy methyl cellulose and 8wt% LiPAA.

This suspension was coated, using a coating bar, on Cu foil and the coating was stamped in round electrodes ready for coin-shaped electrochemical cells assembled as described below in the section headed Test Cell Assembly.

### Test Cell Assembly & Anode Loading with Lithium

Disks (16 mm diameter) were cut from the electrode coatings for use in 2325-button cells. Each 2325 cell contains a 18 mm diameter disk of Cu as a spacer (900 µm thick), a 16 mm diameter disk of the alloy electrode, one 20 mm diameter microporous separator (CELGARD 2400; Separation Products, Hoechst Celanese Corp., Charlotte, N.C. 28273), 18 mm diameter disk of lithium (0.38 mm thick lithium ribbon; Aldrich Chemicals, Milwaukee, Wis.) and an 18 mm copper spacer (900 µm thick). One hundred micro liters of electrolyte solution (1M LiPF₆ in 90 wt% ethylene carbonate (EC):Ethyl Methyl carbonate (EMC)(3:7 v/v))(Ferro Chemicals (Zachary, La.); 10 wt% fluoroethylene carbonate (FEC)(Fujian Chuangxin Science and Technology Development, LTP, Fujian, China)) were mixed and used as the electrolyte. The electrolyte mixture was dried over molecular sieves (3A type) over 12 hours. The coin cells were discharged (lithiated) down towards 5mV at C/10 rate with controlled capacity, so that 18.5% of the anode electrode was pre-lithiated. After the pre-lithiation process, the coin cells were opened in dry-room conditions and the lithiated anode being recovered for combining with a cathode.

### Cathode Preparation

The cathode contained 95 wt% NMC (3M, Korea, BC618), 2.5 wt% SuperP (Timcal, C65) and 2.5 wt% PVDF (Kynar 461) and was produced by first dry mixing NMC and SP together for ½ hour, then add PVDF in NMP, high shear mix for 3 hours. The slurry was then coated on Aluminum foil. Disk electrodes for assembling of full Lithium ion battery cells were then stamped out and ready for use.

### Full Cell Assembly & Testing

The lithiated anode produced as described was combined with a cathode, which was produced as described above. With an N/P ratio of ∼1.19, coin full cell was cycled between 2.8 and 4.2V. The cycling protocol is as follows:
1^{st} cycle: C/10 charge to 4.2V, trickle charge to C/40, rest 15 minutes; C/10 discharge to 2.8V, rest 15 minutes.
2^{nd} cycle onwards: C/4 charge to 4.2V, trickle charge to C/20, rest 15 minutes; C/10 discharge to 2.8V, rest 15 minutes.

### Example 11

### Anode Preparation

### 60wt % Si₇₃Fe₁₇C₁₀, 12.8wt % graphite (Hitachi-MAGD), 16wt% carbon nanotubes (CNT), 3.2wt% CMC, 8wt% LiPAA.

35 wt% polyacrylic acid solution (Sigma Aldrich; 250000 Mw) was diluted with deionized water to 10 wt% and neutralized with lithium hydroxide powder. Two aqueous dispersions of CNT (a) 5 wt% CNT Bayer MaterialScience with 5 wt% carboxy methyl cellulose and 5 wt%CNT BayerMaterialScience with 1% carboxy methyl cellulose) were added so that the weight ratio of lithium polyacrylic acid (solid content) and CNT was 0.5 and mixed in a planetary micro mill with 800 rounds/minute (Fritsch Pulverisette) for 10 minutes. After achieving a homogeneous dispersion of carbon nanotubes in lithium polyacrylate and carboxy methyl cellulose, graphite (Hitachi, MAG-D) was added and mixed in a planetary micro mill with 800 rounds/minute (Fritsch Pulverisette) for 10 minutes. The as-produced dispersion was homogeneous.

Finally the dispersion containing lithium polyacrylate, carboxy methyl cellulose, carbon nanotubes and graphite was mixed with the silicon alloy and again mixed in a planetary micro mill at 800 rounds/minute (Fritsch Pulverisette) for 10 minutes resulting in a paste ready for coating. The amounts of added graphite and silicon alloy were adjusted so that a composition of 60wt % Si73Fe17C10 (alloy), 12.8wt % graphite (Hitachi-MAGD), 16wt% carbon nanotubes (CNT), 3.2wt% carboxy methyl cellulose and 8wt% LiPAA.

This suspension was coated, using a coating bar, on Cu foil and the coating was stamped in round electrodes ready for coin-shaped electrochemical cells assembled as described below in the section headed Test Cell Assembly.

### Cathode Preparation

The cathode contained 95 wt% NMC (3M, Korea, BC618), 2.5 wt% SuperP (Timcal, C65) and 2.5 wt% PVDF (Kynar 461) and was produced by first dry mixing NMC and SP together for ½ hour, then add PVDF in NMP, high shear mix for 3 hours. The slurry was then coated on Aluminum foil. Disk electrodes for assembling of full Lithium ion battery cells were then stamped out and ready for use.

### Full Cell Assembly & Testing

The anode as prepared without pre-lithiation step, was combined with a cathode, which was produced as described above. The N/P was ∼1.46. Coin full cell was cycled between 2.8 and 4.2V. The cycling protocol is as follows:
1^{st} cycle: C/10 charge to 4.2V, trickle charge to C/40, rest 15 minutes; C/10 discharge to 2.8V, rest 15 minutes.
2^{nd} cycle onwards: C/4 charge to 4.2V, trickle charge to C/20, rest 15 minutes; C/10 discharge to 2.8V, rest 15 minutes.

### Example 12:

### 60wt % Si₇₃Fe₁₇C₁₀, 32wt % graphite (Hitachi-MAGE), 8wt% LiPAA.

35 wt% polyacrylic acid solution (Sigma Aldrich; 250000 Mw) was diluted with deionized water to 10 wt% and neutralized with lithium hydroxide powder. Graphite (Hitachi, MAG-E) was added and mixed in a planetary micro mill with 800 rounds/minute (Fritsch Pulverisette) for 10 minutes. The as-produced dispersion was homogeneous.

Finally the dispersion containing lithium polyacrylate and graphite was mixed with the silicon alloy and again mixed in a planetary micro mill at 800 rounds/minute (Fritsch Pulverisette) for 10 minutes resulting in a paste ready for coating. The amounts of added graphite and silicon alloy were adjusted so that a composition of 60wt % Si73Fe17C10 (alloy), 32wt % graphite (Hitachi-MAGE) and 8wt% LiPAA.

This suspension was coated, using a coating bar, on Cu foil and the coating was stamped in round electrodes ready for coin-shaped electrochemical cells assembled as described below in the section headed Test Cell Assembly.

### Results:

| | CNT content in wt. % | Capacity fade in mAh*cm²/ Cycle | Capacity in % after 40 Cycles |
|---|---|---|---|
| Example 10 - w/pre-lithiation | 16 | -0,08 | 0,99 |
| Example 11 - w/o pre-lithiation | 16 | -0,26 | 0,92 |
| Example 12 - w/o prelithiation | 0 | >-0,3 | <0,9 |

As can be seen from the results, the anode of Example 10, comprising a composition according to claim 1, with at least 0,1% active lithium of a charge capacity of the composition prior to incorporation into a cell provides a much lower capacity fade as Example 11, comprising a composition without any active lithium prior to incorporation into a cell.

Additionally, as can be seen from a comparison between Example 10 and Example 12 the capacity fade is much lower when carbon nanotubes are incorporated.

### Embodiments

1. An electrode composition comprising: a silicon alloy comprising silicon, iron and optionally carbon the silicon alloy being capable of undergoing lithiation and delithiation; a binder, and a conductive additive comprising carbon nanotubes, wherein the composition comprises at least 0,1% active lithium of a charge capacity of the composition prior to incorporation into an electrochemical cell.
2. A composition according to embodiment 1, wherein the composition comprises graphitic carbon.
3. A composition according to embodiment 1 or embodiment 2, wherein the composition comprises 10wt% to 90wt% silicon alloy.
4. A composition according to any of the preceding embodiments, wherein the composition comprises 90wt% to 10wt% graphitic carbon.
5. A composition according to any one of the preceding embodiments, wherein the composition comprises 2wt% to 20wt% binder.
6. A composition according to any one of the preceding embodiments, wherein the composition comprises 0.2wt% to 80wt% carbon nanotubes.
7. A composition according to any one of the preceding embodiments, wherein the binder comprises polyacrylate.
8. A composition according to embodiment 7, wherein the binder comprises lithium polyacrylate.
9. A composition according to any one of the preceding embodiments for use in an electrochemical cell, wherein the silicon alloy is of formula SiₓFe_{y}C_{z}, where x, y and z represent atomic % values and
   a) x>2y+z, and
   b) x, y and z are each greater than 0.
10. A composition according to embodiment 8 wherein x≥60, and/or y≥5.
11. A composition according to any one of the preceding embodiments, wherein the alloy comprises from about 60 to about 80 atomic % silicon, from about 5 to about 20 atomic % iron, and from about 5 to about 15 atomic % carbon.
12. A composition according to any one of the preceding embodiments wherein the silicon alloy further comprises one or more metals selected from cobalt, nickel, titanium, molybdenum, tungsten or combinations thereof.
13. An electrochemical cell comprising: a positive electrode; a negative electrode; and an electrolyte, wherein the negative electrode comprises a composition according to any one of the preceding embodiments.
14. A battery pack comprising at least one cell according to embodiment 13.
15. A method of making an electrode composition as claimed in claim 1, the method comprising:
   providing a silicon alloy comprising silicon, iron and optionally carbon, the silicon alloy being capable of undergoing lithiation and delithiation; providing a binder, and providing a conductive additive comprising carbon nanotubes; mixing the composition and adding at least 0,1 % active lithium of a charge capacity of the composition.
16. A method of making an electrochemical cell electrode, the method comprising:
   providing a current collector; applying to the current collector an electrode composition that comprises a silicon alloy comprising silicon, iron and optionally carbon the silicon alloy being capable of undergoing lithiation and delithiation; a binder, and a conductive additive comprising carbon nanotubes,
   wherein the electrode composition comprises at least 0.1% active lithium of a charge capacity of the composition prior to incorporation into an electrochemical cell.
17. A method according to embodiment 16, wherein the active lithium is added to the composition before or after applying the coating to the collector.

## Claims

1. An electrode composition for use in an electrochemical cell comprising:
a silicon alloy comprising silicon, iron and optionally carbon, the silicon alloy being capable of undergoing lithiation and delithiation;
a binder, and
a conductive additive comprising carbon nanotubes,
wherein the composition comprises at least 0,1% active lithium of a charge capacity of the composition prior to incorporation into an electrochemical cell.

2. An electrode composition claimed in claim 1, wherein the composition comprises graphitic carbon.

3. A composition as claimed in claim 1 or 2, wherein the composition comprises 10wt% to 90wt% silicon alloy.

4. A composition as claimed in any of the preceding claims, wherein the composition comprises 90wt% to 10wt% graphitic carbon.

5. A composition as claimed in any of the preceding claims, wherein the composition comprises 2wt% to 20wt% binder.

6. A composition as claimed in any of the preceding claims, wherein the composition comprises 0.2wt% to 80wt% carbon nanotubes.

7. A composition as claimed in any of the preceding claims, wherein the binder comprises polyacrylate.

8. A composition as claimed in claim 7, wherein the binder comprises lithium polyacrylate.

9. A composition as claimed in any of the preceding claims for use in an electrochemical cell wherein the silicon alloy is of formula SiₓFe_{y}C_{z}, where x, y and z represent atomic % values and
a) x>2y+z, and
b) x, y and z are each greater than 0.

10. A composition as claimed in claim 9 wherein x≥60, and/or y≥5.

11. A composition as claimed in any of the preceding claims, wherein the alloy comprises from about 60 to about 80 atomic % silicon, from about 5 to about 20 atomic % iron, and from about 5 to about 15 atomic % carbon.

12. A composition as claimed in any of the preceding claims wherein the silicon alloy further comprises one or more metals selected from cobalt, nickel, titanium, molybdenum, tungsten or combinations thereof.

13. An electrochemical cell comprising:
a positive electrode;
a negative electrode; and
an electrolyte,
wherein the negative electrode comprises an electrode composition as claimed in any of the preceding claims.

14. A battery pack comprising at least one cell according to claim 13.

15. A method of making an electrode composition as claimed in claim 1, the method comprising:
providing a silicon alloy comprising silicon, iron and optionally carbon, the silicon alloy being capable of undergoing lithiation and delithiation;
providing a binder, and
providing a conductive additive comprising carbon nanotubes,
mixing the composition and
adding at least 0,1% active lithium of a charge capacity of the composition.

16. A method of making an electrochemical cell electrode, the method comprising:
providing a current collector;
applying to the current collector an electrode composition that comprises
- a silicon alloy comprising silicon, iron and optionally carbon, the silicon alloy being capable of undergoing lithiation and delithiation;
- a binder, and
- a conductive additive comprising carbon nanotubes,
wherein the electrode composition comprises at least 0,1% active lithium of a charge capacity of the composition prior to incorporation into an electrochemical cell.

17. A method as claimed in claim 16, wherein the active lithium is added to the composition before or after applying the coating to the collector.
